# EUROPEAN PATENT APPLICATION

(11) **EP 4 513 919 A1**
(43) Date of publication of application: **26.02.2025**
(21) Application number: 22940776.2
(22) Date of filing: 20.12.2022
(51) Int. Cl.: H04W 8/24

(54) **PROFILE INFORMATION ACQUISITION METHOD AND DEVICE, PROFILE INFORMATION SENDING METHOD AND DEVICE, PROFILE INFORMATION MANAGEMENT UNIT, AND NETWORK ELEMENT**

(30) Priority: 06.05.2022 CN 202210485347
(71) Applicant: ZTE Corporation, Shenzhen, Guangdong 518057 (CN)
(72) Inventor: ZHAO, Zhe, Shenzhen, Guangdong 518057 (CN); XUE, Yan, Shenzhen, Guangdong 518057 (CN); XIE, Feng, Shenzhen, Guangdong 518057 (CN); DAI, Bo, Shenzhen, Guangdong 518057 (CN); LIU, Na, Shenzhen, Guangdong 518057 (CN)
(74) Representative: Carangelo, Pierluigi
(86) International application number: PCT/CN2022/140326
(87) International publication number: WO 2023/213082

(57) **Abstract**

Provided in the embodiments of the present application are a profile information acquisition method and device, a profile information sending method and device, a profile information management unit, and a network element, a storage medium and a program product. The profile information acquisition method comprises: acquiring profile information of a second network device, wherein the profile information comprises parameter information which can represent the second network device.

## Description

### CROSS-REFERENCE TO RELATED APPLICATION

This application is based on and claims the priority of Chinese patent application No. 202210485347.4 filed on May 06, 2022, the disclosure of which is incorporated herein by reference in its entirety.

### TECHNICAL FIELD

The present disclosure relates to the field of communications technologies, in particular to a method, a device, a management unit, a network element, a storage medium and a program product for acquiring, sending characterization information.

### BACKGROUND

In a communication network system, software and hardware of communication devices such as base stations and terminal devices are different. Different versions of software and hardware from different manufacturers show different communication capabilities when actually used.

In a network system of existing technology, it is difficult for a network to acquire software and hardware information of related devices, which is likely to cause poor communication adaptation, thus affecting network communication efficiency and traffic experience.

### SUMMARY

Provided are a method, a device, a management unit, a network element, a storage medium and a program product for acquiring, sending characterization information in some embodiments of the present disclosure, aiming at enabling rapid adaptation between different devices and improving network communication experience.

In accordance with a first aspect of the present disclosure, an embodiment provides a method for acquiring characterization information, which is applied to a first network apparatus. The method includes: acquiring characterization information of a second network apparatus, where the characterization information includes parameter information capable of characterizing the second network apparatus.

In accordance with a second aspect of the present disclosure, an embodiment provides a method for sending characterization information, which is applied to a second network apparatus. The method includes: sending characterization information to a first network apparatus, where the characterization information includes parameter information capable of characterizing the second network apparatus.

In accordance with a third aspect of the present disclosure, an embodiment provides a method for acquiring characterization information, which is applied to a third network apparatus. The method includes: receiving characterization information of a second network apparatus sent by the second network apparatus; and sending the characterization information of the second network apparatus to a first network apparatus, where the characterization information includes parameter information capable of characterizing the second network apparatus.

In accordance with a fourth aspect of the present disclosure, an embodiment provides a device for acquiring characterization information, which includes: a first receiving module, configured to acquire characterization information of a second network apparatus, where the characterization information includes parameter information capable of characterizing the second network apparatus.

In accordance with a fifth aspect of the present disclosure, an embodiment provides a device for sending characterization information, including: a second sending module, configured to send characterization information to a first network apparatus, where the characterization information includes parameter information capable of characterizing the second network apparatus.

In accordance with a sixth aspect of the present disclosure, an embodiment provides a unit for managing characterization information, configured to manage characterization information and a service policy, where the characterization information is obtained by means of the method of any one of the first aspect, the second aspect, or the third aspect.

In accordance with a seventh aspect of the present disclosure, an embodiment provides a network element, which includes: a memory, a processor, and a computer program stored in the memory and executable by the processor, where the computer program, when executed by the processor, causes the processor to implement the method of any one of the first aspect, the second aspect, or the third aspect.

In accordance with an eighth aspect of the present disclosure, an embodiment provides a computer-readable storage medium storing computer-executable instructions which, when executed by a computer, cause the computer to execute the method of any one of the first aspect, the second aspect, or the third aspect.

In accordance with a ninth aspect of the present disclosure, an embodiment provides a computer program product, including a computer program or computer instructions stored in a computer-readable storage medium, from which a processor of a computer device reads the computer program or the computer instructions, where the computer program or the computer instructions, when executed by the processor, cause the computer device to execute the method of any one of the first aspect, second aspect or third aspect.

### BRIEF DESCRIPTION OF DRAWINGS

FIG. 1 is a schematic diagram of a system architecture according to an embodiment of the present disclosure;
FIG. 2 is a schematic diagram of a system architecture according to another embodiment of the present disclosure;
FIG. 3 is a flowchart of a method for acquiring characterization information according to an embodiment of the present disclosure;
FIG. 4 is a flowchart of a method for acquiring characterization information according to an embodiment of the present disclosure;
FIG. 5 is a flowchart of a method for acquiring characterization information according to an embodiment of the present disclosure;
FIG. 6 is a flowchart of a method for acquiring characterization information according to an embodiment of the present disclosure;
FIG. 7 is a flowchart of a method for acquiring characterization information according to an embodiment of the present disclosure;
FIG. 8 is a flowchart of a method for acquiring characterization information according to an embodiment of the present disclosure;
FIG. 9 is a flowchart of a method for acquiring characterization information according to an embodiment of the present disclosure;
FIG. 10 is a flowchart of a method for sending characterization information according to an embodiment of the present disclosure;
FIG. 11 is a flowchart of a method for sending characterization information according to an embodiment of the present disclosure;
FIG. 12 is a flowchart of a method for acquiring characterization information according to an embodiment of the present disclosure;
FIG. 13 is a schematic diagram of a device for acquiring characterization information according to an embodiment of the present disclosure;
FIG. 14 is a schematic diagram of a device for sending characterization information according to an embodiment of the present disclosure;
FIG. 15 is a schematic diagram of a network element according to an embodiment of the present disclosure;
FIG. 16 is a flowchart of resource allocation processing according to characterization information according to an embodiment of the present disclosure; and
FIG. 17 is a schematic diagram of a device for forwarding characterization information according to an embodiment of the present disclosure.

### DETAILED DESCRIPTION

In order to make the objectives, technical schemes, and advantages of the present disclosure more apparent, the present disclosure is further described in detail with reference to the accompanying drawings and embodiments. It should be understood that the particular embodiments described herein are only intended to explain the present disclosure, and are not intended to limit the present disclosure.

It is to be noted that although a logical order is shown in the flowcharts, the operations shown or described may be performed, in some cases, in a different order from the order shown or described in the flowcharts. The terms such as "first" and "second" in the description, claims and above-mentioned drawings are intended to distinguish between similar objects and are not necessarily to describe a specific order or sequence.

In the description of embodiments of the present disclosure, unless otherwise explicitly defined, the terms such as "configure", "install", and "connect" should be construed in a broad sense, and those skilled in the art can determine the specific meanings of the above terms in the present disclosure in a rational way in conjunction with the specific contents of embodiments of the technical schemes. In the embodiments of the present disclosure, the term such as "further," "exemplary," or "optionally" is used to represent as an example, an illustration, or a description and should not be construed as being more preferred or advantageous than another embodiment or design. The use of the term such as "further," "exemplary," or "optionally," is intended to present a related concept in a specific manner.

The embodiments of the present disclosure can be applied to various devices related to network communication, such as mobile phones, tablet computers, computers, notebook computers, wearable devices, other terminal devices such as intelligent agents; or can also be applied to base stations, core networks, edge nodes, etc., which is not limited in the embodiments of the present disclosure.

In a communication network, communication devices such as base stations and terminal devices of different software versions and from different hardware manufacturers differ a lot in communication capabilities. Service problems caused by differences between software and hardware are difficult to locate, and it requires a lot of effort to to troubleshooting when software and hardware fail. In addition, although software and hardware will be assessed in the laboratory before official release, such assessment is too idealistic to truly reflect actual network performance. However, in an actual system operation, there is a lack of an accurate evaluation mechanism for different software versions and hardware capabilities. In a current network, communication devices cannot directly obtain each other's relevant information through an existing protocol, and this lack of mutual understanding leads to poor adaptation between communication devices from different manufacturers, and further causes poor network communication experience.

Provided are a method, a device, a management unit, a network element, a computer-readable storage medium, and a computer program product for acquiring, sending characterization information in some embodiments of the present disclosure. By acquiring characterization information of a second network apparatus through a first network apparatus, the second network apparatus is characterized, so that the first network apparatus can have clear cognition of the second network apparatus. After obtaining individual characteristics of the second network apparatus, a targeted service policy is obtained to adapt to individual characteristics of different network apparatus, thereby improving network efficiency and communication experience.

Several embodiments of the present disclosure will be further explained below with reference to the accompanying drawings.

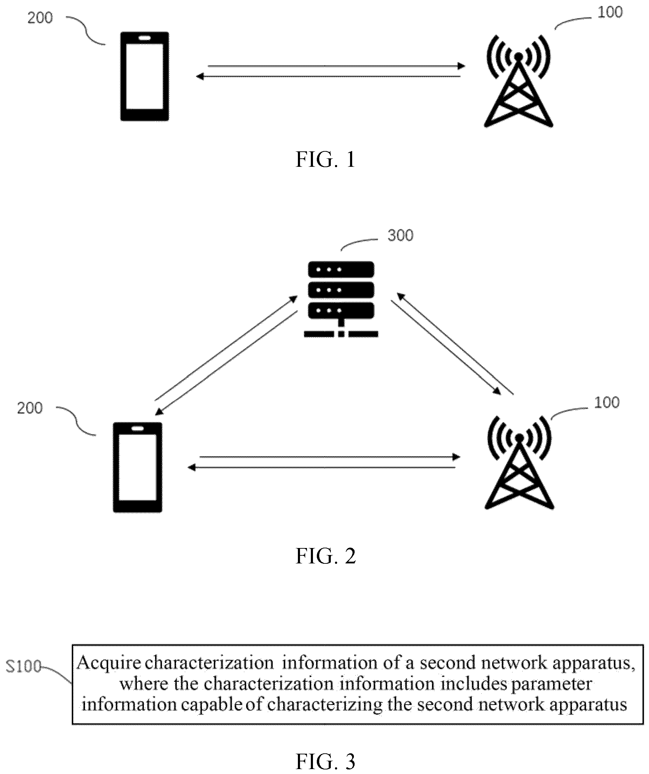

FIG. 1 is a schematic diagram of a system architecture for executing a method for acquiring characterization information and a method for sending characterization information according to an embodiment of the present disclosure. As shown in FIG. 1, the system architecture includes a first network apparatus 100 and a second network apparatus 200. The first network apparatus 100 and the second network apparatus 200 may be communicatively connected via, but not limited to, 5G communication or the like.

The first network apparatus 100 is a communication device, such as a base station, capable of receiving and processing a wireless signal, and includes a first receiving module, a first evaluation module, a first policy determination module, and a first sending module.

The first network apparatus 100 may acquire characterization information of the second network apparatus 200 through the first receiving module. The first network apparatus 100 can quickly obtain relevant parameters of the second network apparatus 200 by acquiring the characterization information of the second network apparatus 200, and quickly learn individual characteristics of the second network apparatus 200.

In some possible implementations, after acquiring the characterization information of the second network apparatus, the first network apparatus may further evaluate a capability of the second network apparatus according to the characterization information through the first evaluation module to obtain a capability evaluation result of the second network apparatus.

After obtaining characterization information of different node network elements, each node network element of a network can interact in a new mode through staring, scoring, rating, and the like. For example, by grading base station chips, chips with high grade are selected for communication services, which provides operators and equipment manufacturers with an effective reference for chip selection. For example, by starting terminal chips, it helps the network and consumers clearly understand main reasons why a requirement for a data rate service or the like cannot be met. By acquiring characterization information such as software and hardware, a base station can characterization a terminal device, and the terminal device can also characterization the base station. For example, the base station can score and grade performance of the terminal device in the network, to help engineers address problems, and help consumers choose a terminal device brand. Through the terminal device's characterizations of base stations from different manufacturers, characteristics of the base stations from different manufacturers can be learned. For example, a base station from a manufacturer performs well in high downlink throughput, and a base station from another manufacturer performs well in high uplink throughput. Through the terminal device's evaluation of the base stations, the terminal device can select the base stations from different manufacturers to provide service connections according to service demands. For example, the terminal device selects a base station from manufacturer A to provide a service for service 1, and selects a base station from manufacturer B to provide a service for service 2.

In some possible implementations, after acquiring the characterization information of the second network apparatus, the first network apparatus may further analyze the second network apparatus according to the characterization information through the first policy determination module and determinate a service policy which corresponds to the second network apparatus.

It should be noted that the service policy corresponding to the second network apparatus determined by the first network apparatus may be executed only on the first network apparatus, for example, the first network apparatus performs risk avoidance by performing policy operations such as detaching, deactivation, speed limiting, blacklisting, etc. on the second network apparatus, or the first network apparatus configures specific resources for the second network apparatus for service guarantee. The service policy corresponding to the second network apparatus determined by the first network apparatus may be further sent to the second network apparatus, and then the second network apparatus executes the service policy, for example, the second network apparatus performs power off, software upgrade, or the like.

In some possible implementations, before acquiring the characterization information of the second network apparatus, the first network apparatus may further send a characterization information request to the second network apparatus through the first sending module. After obtaining the capability evaluation result of the second network apparatus, the first network apparatus may further send the capability evaluation result of the second network apparatus through the first sending module, to the second network apparatus, or to a network apparatus such as a core network, an edge node, or another base station. After obtaining the service policy of the second network apparatus, the first network apparatus may further send the service policy which corresponds to the second network apparatus through the first sending module to instruct the second network apparatus to perform a corresponding operation according to the service policy.

It should be noted that the first network apparatus may be communicatively connected to each of a plurality of second network apparatuses, simultaneously acquire characterization information from the plurality of second network apparatuses, and perform capability evaluation and service policy determination on the corresponding one of the second network apparatuses according to the respective characterization information. Instead of a base station, the first network apparatus may also be a core network, a terminal device, an intelligent agent, or the like, which is not specifically limited in the present disclosure.

The second network apparatus 200 is a hardware device having storage, computing, and communication capabilities, for example, a mobile phone, a pad or another the terminal device, and includes a second sending module, a second receiving module, and a second execution module.

The second network apparatus 200 may send the characterization information to the first network apparatus 100 through the second sending module. The characterization information includes parameter information capable of characterizing the second network apparatus 200. The second network apparatus 200 sends the characterization information of the second network apparatus to the first network apparatus 100, so that the first network apparatus 100 can quickly know the characteristics of the second network apparatus 200 for quick adaptation.

In some possible implementations, the second network apparatus may further acquire, through the second receiving module, the characterization information request sent by the first network apparatus, and after receiving the characterization information request, the second network apparatus may feedback the relevant characterization information through the second sending module. The second network apparatus may further receive, through the second receiving module, the capability evaluation result of the second network apparatus sent by the first network apparatus, thereby having clear cognition of itself. The second network apparatus may further acquire, through the second receiving module, the corresponding service policy determined by the first network apparatus, and obtain related configuration information of the service policy.

It should be noted that the second network apparatus may proactively send the characterization information to the first network apparatus when establishing a communicative connection with the first network apparatus, or may send the characterization information to the first network apparatus after receiving the characterization information request from the first network apparatus.

In some possible implementations, after acquiring the service policy which corresponds to the second network apparatus, the second network apparatus may further execute the corresponding service policy through the second execution module to optimize communication experience with the first network apparatus.

It should be noted that instead of a terminal device, the second network apparatus may also be a core network, a base station, an intelligent agent, an edge node, or the like, which is not specifically limited in the present disclosure.

Illustrated below is a scenario in which the first network apparatus is a base station, and the second network apparatus is a terminal device. It can be understood that this scenario is only one application example included in the present disclosure merely for clearly explaining the scheme of the present disclosure rather than imposing specific limitations. Taking a base station and a terminal device as an example, after the base station is communicatively connected to the terminal device, when the base station wants to know the terminal device, the base station sends a characterization information request to the terminal device, to request, from the terminal device, characterization information of the terminal device. The terminal device responds after receiving the characterization information request from the base station, and feeds back the characterization information of the terminal device to the base station. Here, the characterization information may include, but is not limited to software information like a version of the terminal device's operating system, or a version of the terminal device's application for example; hardware information like a terminal device chip manufacturer, a chip signal, or a terminal mobile phone brand for example; or service package information subscribed by the user of the terminal device, such as monthly data package, a service level, or a subscribed high-end service package. The base station forms clear cognition of the terminal device according to the acquired characterization information, and obtains a service policy according to the characterization information. For example, a chip capability is identified for a terminal device speed limitation problem, and an end user is informed that the reason for the speed limitation is problems of a certain chip; for example, a customized service is provided according to a package subscribed by the end user. For a high-level package user, the base station preferentially allocates physical resources with good channel conditions or adds more carrier resources according to the user's software and hardware capabilities to ensure service experience. For another example, the base station determines a policy for reducing terminal device's power consumption and sends the policy to the terminal device. The terminal device receives and executes an instruction included in the service policy from the base station, such as, a received policy instruction to turn off a certain chip is; or a received policy instruction to require the terminal device to reduce power consumption is; or a received specific carrier resource instruction to be used for data transmission is.

It can be understood that in a typical communication network, one base station corresponds to a plurality of terminal devices, that is, the characterization information acquisition method between the base station and the terminal device may occur between one base station and a plurality of terminal devices.

The base station forms an of characteristics of the terminal device through the characterization information, so as to depict the terminal device. The base station executes, according to a characterization result and on the terminal device, an individualized strategy adapted to the characteristics of the terminal device. Through depicting of the terminal device, the base station can customize services for a user, providing the user with different levels of refined services, and improving user experience and user satisfaction.

In some possible implementations, after the base station is communicatively connected to the terminal device, the terminal device detects that it is connected to the base station and proactively sends its own characterization information to the base station, without the need for the base station to send a characterization information request, which saves a communication process and improves the communication efficiency. It can be understood that for a process after the terminal device sends the characterization information to the base station, reference may be made to the above-described example.

In some other possible implementations, after the base station and the terminal device perform characterization interaction once, under the condition that the base station and the terminal device maintain communicative connection, the terminal device detects whether its own characterization information is updated. If the terminal device detects that its own characterization information is updated, the terminal device proactively sends its updated characterization information to the base station. When the terminal device is disconnected from the base station and then reconnected again, if the terminal device's characterization information is updated after the disconnection, the terminal device proactively sends the updated characterization information to the base station when the terminal device is connected again to the base station.

In some other possible implementations, the first network apparatus may also acquire its own characterization information. The first network apparatus collects the characterization information of itself through the first receiving module, where the characterization information includes parameters capable of characterizing the first network apparatus.

Illustrated below is an example where the first network apparatus is a base station. It can be understood that this scenario is only one application example included in the present disclosure merely for clearly explaining the scheme of the present disclosure rather than imposing specific limitations. A process in which the base station characterizations itself is as follows:
- the base station collects characterization information of the base station. The characterization information includes software and hardware parameter information configured by a system; and
- the base station obtains its own corresponding service policy according to the collected characterization information of the base station, and executes the corresponding service policy. For example, when it is determined that a specific hardware will fail in a specific scenario, the base station shuts down the hardware to avoid a network anomaly in the specific scenario; or for example, when determining that a specific software version will fail in a specific scenario, the base station performs a version fall back to avoid a possible network anomaly.

By collecting its own information and making a characterization according to the software and hardware information of the base station, the base station can understand its own characteristics, so as to perform network prediction and risk avoidance. For a smart base station, self-evolution can also be realized through self-characterizing. For example, through self-characterizing, the smart base station can automatically find a suitable version for automatic upgrade and patching.

Illustrated below is a scenario in which the first network apparatus is a base station, and the second network apparatus is also a base station. It can be understood that this scenario is only one application example included in the present disclosure merely for clearly explaining the scheme of the present disclosure rather than imposing specific limitations. In the scenario in which the first network apparatus is a base station and the second network apparatus is also a base station, that is, a base station to base station scenario, understandably, for better distinction, the base station corresponding to the first network apparatus is named base station A, and the base station corresponding to the second network apparatus is named base station B. The naming here is only to distinguish between the two base stations, instead of a limitation.

A characterization information transmission process between base station A and base station B is as follows:
- base station A sends a characterization information request to base station B through an inter-base station interface;
- base station B responds to the characterization information request and sends characterization information to base station A through the inter-base station interface;
   base station A characterizations base station B according to information such as software and hardware parameters of base station B in the characterization information of base station B;
   base station A obtains a service policy according to a characterization result, for example, when it is determined that a software version of base station B is at risk of failure, a handover of a user from base station A to base station B is prevented or base station A is prevented from migrating data to base station B;
- when the characterization information of base station B is changed, the updated characterization information is proactively sent to base station A, for example, base station B has its characterization information upgraded after sending the characterization information response, and then proactively sends the upgraded characterization information to base station A; and
- base station A receives the updated characterization information of base station B, updates the characterization of base station B, and obtains a new service policy after analysis, for example, base station A knows that a fault of base station B has been solved through the new characterization information, and allows the handover of the user from base station A to base station B or allow data migration from base station A to base station B.

Mutual understanding between base stations can better coordinate network communication services. For example, an X2 interface is used between 4G base stations, and an Xn interface is used between 5G base stations. However, at present, these inter-base station interfaces are only used to send communication data information, but not the software and hardware information of the base stations. As base stations from different equipment manufacturers use quite different software and hardware, it is often difficult for them to realize interconnection due to software and hardware problems. Even for base stations from the same equipment manufacturer, software versions may be different. Through characterization and cognition between base stations, problems caused by base station software and hardware can be conveniently and quickly located. Through software and hardware characterizing by a base station on other base station(s) and execution of corresponding service policies, network communication quality degradation caused by problems of the other base station(s) can be avoided.

In some other possible implementations, when not directly connected through the inter-base station interface, base station A and base station B can perform data transmission via a third network apparatus connected to both base station A and base station B, to transfer, between base station A and base station B, of the characterization information and/or instructions included in the service policy. It can be understood that the third network apparatus may be a core network, or may be base station C that is communicatively connected to both base station A and base station B, which is not specifically limited here.

In some other possible implementations, according to characterization information of the base station, a network controller or the core network can also help the base station automatically find a suitable version for an upgrade. The network controller obtains computing power information (such as hardware information, CPU information, GPU information, storage capacity information, etc.) of a plurality of base stations/intelligent agents through characterizations of the base stations/intelligent agents to determinate computing power sharing and computing power scheduling policies.

Illustrated below is a scenario in which the first network apparatus is a core network, and the second network apparatus is a base station. It can be understood that this scenario is only one application example included in the present disclosure merely for clearly explaining the scheme of the present disclosure rather than imposing specific limitations.

In the scenario in which the first network apparatus is a core network and the second network apparatus is a base station, that is, a core network-to-base station scenario, when the base station accesses a network for the first time, the network needs to understand characteristics and capabilities of the base station in order to facilitate data routing and transmission. In this case, the core network acquires characterization information of the base station, such as software and hardware information, characterizations the base station, infers the number of data concurrency that the base station can support and whether there is a bug in a software version of the base station, etc., obtains the characteristics of the base station through the characterization information of the base station, and distributes data to the base station according to the characteristics of the base station. It can be understood that in the future, there may be base stations with perception functions, AI-based functions, or computing resource sharing functions. By obtaining characterization information of such base stations, the core network can better provide services for characterizations of such base stations. Characterizing operations performed by the core network on the base station, that is, a characterization information acquisition process between the core network and the base station is as follows:
- after the base station accesses the network, the base station sends characterization information of the base station to the core network, where the characterization information includes hardware information, computing resources, etc.;
- the core network characterizations the base station according to the characterization information of the base station;
- the core network obtains, according to the corresponding characterization information of the base station, a service policy, such as determining which data is to be distributed to the base station;
- when the characterization information of the base station changes, for example, a software version of the base station is upgraded, hardware of the base station is replaced and upgraded, etc., the base station sends updated characterization information to the core network, where understandably, the base station may send the updated characterization information to the core network proactively or after receiving a data request from the core network;
- the core network receives the updated characterization information of the base station, and updates a characterization of the corresponding base station according to the updated characterization information; and
- according to the updated characterization information, the core network obtains a new service policy, such as adjusting data distribution to the base station.

It can be understood that the above-described core network to base station scenario is applicable to either one core network to one base station or one core network to a plurality of base stations.

FIG. 2 is a schematic diagram of a system architecture for executing a method for acquiring characterization information and a method for sending characterization information according to an embodiment of the present disclosure. As shown in FIG. 1, the system architecture includes a first network apparatus 100, a second network apparatus 200, and a third network apparatus 300. The first network apparatus 100, the second network apparatus 200, and the third network apparatus 300 may be communicatively connected by, but not limited to, 5G communication or the like.

The first network apparatus 100 is a communication device, such as a base station, capable of receiving and processing a wireless signal, and includes a first receiving module, a first evaluation module, a first policy determination module, and a first sending module.

The first network apparatus 100 may acquire, through the first receiving module, characterization information of the second network apparatus 200 sent by the third network apparatus 300. The first network apparatus 100 can quickly obtain relevant parameters of the second network apparatus 200 by acquiring the characterization information of the second network apparatus 200, and quickly understand individual characteristics of the second network apparatus 200.

In some possible implementations, after acquiring the characterization information of the second network apparatus, the first network apparatus may further evaluate a capability of the second network apparatus according to the characterization information through the first evaluation module to obtain a capability evaluation result of the second network apparatus.

In some possible implementations, after acquiring the characterization information of the second network apparatus, the first network apparatus may further analyze the second network apparatus according to the characterization information through the first policy determination module and determinate a service policy which corresponds to the second network apparatus.

In some possible implementations, before acquiring the characterization information of the second network apparatus, the first network apparatus may further send a characterization information request to the third network apparatus through the first sending module, so that the third network apparatus forwards the characterization information request to the second network apparatus. After obtaining the capability evaluation result of the second network apparatus, the first network apparatus may further send the capability evaluation result of the second network apparatus to the third network apparatus through the first sending module. After obtaining the service policy of the second network apparatus, the first network apparatus may further send the service policy which corresponds to the second network apparatus to the third network apparatus through the first sending module.

It should be noted that the first network apparatus may be communicatively connected to each of a plurality of second network apparatuses via the third network apparatus, simultaneously acquire characterization information of the plurality of second network apparatuses via the third network apparatus, and perform capability evaluation and service policy determination on the corresponding second network apparatuses according to the respective characterization information. Instead of a base station, the first network apparatus may also be a core network, a terminal device, an intelligent agent, or the like, which is not specifically limited in the present disclosure.

The second network apparatus 200 is a hardware device having storage, computing, and communication capabilities, for example, a mobile phone, a pad or another the terminal device, and includes a second sending module, a second receiving module, and a second execution module.

The second network apparatus may send the characterization information to the third network apparatus through the second sending module so that the third network apparatus sends the characterization information of the second network apparatus to the first network apparatus. The characterization information includes parameter information capable of characterizing the second network apparatus.

In some possible implementations, the second network apparatus may further acquire, through the second receiving module, the characterization information request of the first network apparatus sent by the third network apparatus, and after receiving the characterization information request, the second network apparatus may feedback the relevant characterization information to the third network apparatus through the second sending module. The second network apparatus may further receive, through the second receiving module, the capability evaluation result that is sent by the third network apparatus and that is given by the first network apparatus for the second network apparatus, thereby having clear cognition of the second network apparatus. The second network apparatus may further acquire, through the second receiving module, the service policy corresponding to the second network apparatus, that is sent by the third network apparatus and that is determined by the first network apparatus, and obtain related configuration information of the service policy.

It should be noted that the second network apparatus may proactively send the characterization information to the third network apparatus when establishing a communicative connection with the first network apparatus and the third network apparatus, or may send the characterization information to the third network apparatus after receiving the characterization information request of the first network apparatus sent by the third network apparatus.

In some possible implementations, after acquiring the service policy which corresponds to the second network apparatus, the second network apparatus may further execute the corresponding service policy through the second execution module to optimize communication experience with the first network apparatus and the third network apparatus.

It should be noted that instead of a terminal device, the second network apparatus may also be a core network, a base station, an intelligent agent, an edge node, or the like, which is not specifically limited in the present disclosure.

The third network apparatus 300 is a communication device, such as a core network, capable of receiving and processing a wireless signal, and includes a third receiving module, a third sending module, and a third processing module. The third network apparatus 300 is communicatively connected to both the first network apparatus 100 and the second network apparatus 200.

The third network apparatus 300 acquires the characterization information of the second network apparatus 200 through the third receiving module, and then sends the characterization information of the second network apparatus 200 to the first network apparatus 100 through the third sending module. The third network apparatus 300 forwards the characterization information and enables transmission of the characterization information transmission between the first network apparatus 100 and the second network apparatus 200 when they cannot directly communicate with each other. Alternatively, the characterization information is processed by the third processing module, so that the first network apparatus and the second network apparatus perform characterization information transmission.

In some possible implementations, the third network apparatus acquires, through the third receiving module, the characterization information request to the second network apparatus sent by the first network apparatus, and forwards the characterization information request to the second network apparatus via the third sending device.

The third network apparatus may further acquire, through the third receiving module, the capability evaluation result of the second network apparatus sent by the first network apparatus, and then forward the capability evaluation result to the second network apparatus through the third sending module; and
the third network apparatus may further acquire, through the third receiving module, the service policy corresponding to the second network apparatus sent by the first network apparatus, and then forward the service policy corresponding to the second network apparatus to the second network apparatus through the third sending module.

In some possible implementations, the third network apparatus may further perform, through the third processing module, at least one of the following:
- processing the received second network apparatus characterization information;
- re-evaluating the received evaluation result of the second network apparatus; or
- performing policy modification on received policy information of the second network apparatus.

In some possible implementations, the third network apparatus may further perform security processing, such as privacy protection, identifier conversion, data desensitization, etc., on the acquired characterization information of the second network apparatus through the third processing module, and then send processed characterization information to the first network apparatus through the third sending module.

The third network apparatus may further perform compression processing on the acquired characterization information of the second network apparatus through the third processing module, and then send compressed characterization information to the first network apparatus through the third sending module.

The third network apparatus may further perform filling processing on the acquired characterization information of the second network apparatus through the third processing module, and then send filled characterization information to the first network apparatus through the third sending module.

And the third network apparatus may further jointly indicate, by using multiple pieces of information, the acquired characterization information of the second network apparatus through the third processing module, and then send, to the first network apparatus through the third sending module, characterization information jointly indicate by multiple pieces of information.

In some possible implementations, the third network apparatus performs, through the third sending module, at least one of the following:
- sending a characterization information response of the second network apparatus to the first network apparatus, where the characterization information response includes the characterization information of the second network apparatus;
- sending, to the second network apparatus, the evaluation result of the second network apparatus determined by the first network apparatus;
- sending, to a fourth network apparatus, the evaluation result of the second network apparatus determined by the first network apparatus;
- sending, to the second network apparatus, the policy information of the second network apparatus determined by the first network apparatus;
- sending, to the fourth network apparatus, the policy information of the second network apparatus determined by the first network apparatus;
- sending, to the second network apparatus, an evaluation result of the second network apparatus determined by the third network apparatus;
- sending, to the fourth network apparatus, the evaluation result of the second network apparatus determined by the third network apparatus;
- sending, to the second network apparatus, policy information of the second network apparatus determined by the third network apparatus; or
- sending, to the fourth network apparatus, the policy information of the second network apparatus determined by the third network apparatus.

It can be understood that the fourth network apparatus may be a base station, a terminal device, a core network, an edge node, or the like, which is not specifically limited in the present disclosure. It should be noted that instead of a core network, the third network apparatus may be a terminal device, a base station, an edge node, or the like, which is not specifically limited in the present disclosure.

FIG. 3 is a flowchart of a method for acquiring characterization information according to an embodiment of the present disclosure. As shown in FIG. 3, the characterization information acquisition method is applied to a first network apparatus which is, for example, the first network apparatus 100 included in the system architecture shown in FIG. 1 or FIG. 2. The method may include, but is not limited to, operation S100.

At operation S100, characterization information of a second network apparatus is acquired, where the characterization information includes parameter information capable of characterizing the second network apparatus.

In a possible implementation, the first network apparatus may acquire the characterization information of the second network apparatus by sending a related request to the second network apparatus, or by the second network apparatus autonomously sending the characterization information of the second network apparatus to the first network apparatus.

In another possible implementation, the first network apparatus may store the received characterization information of the second network apparatus through a storage module to facilitate subsequent operations of processing, forwarding, and sharing of the characterization information, and the like.

It can be understood that the first network apparatus may acquire characterization information of each of at least one second network apparatus.

In the present disclosure, by acquiring the characterization information of the second network apparatus, the second network apparatus is characterized, so that the first network apparatus can have clear cognition of the second network apparatus. After obtaining individual characteristics of the second network apparatus, a targeted service policy can be obtained subsequently through analysis to adapt to individual characteristics of network apparatuses, thereby improving network efficiency and communication experience.

In another possible implementation, the first network apparatus sends the acquired characterization information of the second network apparatus to a node in a network, for example, a core network, a base station, an edge node, or the like, and stores the characterization information of the second network apparatus, so that another network apparatus can conveniently obtain the characterization information of the second network apparatus, which improves communication efficiency.

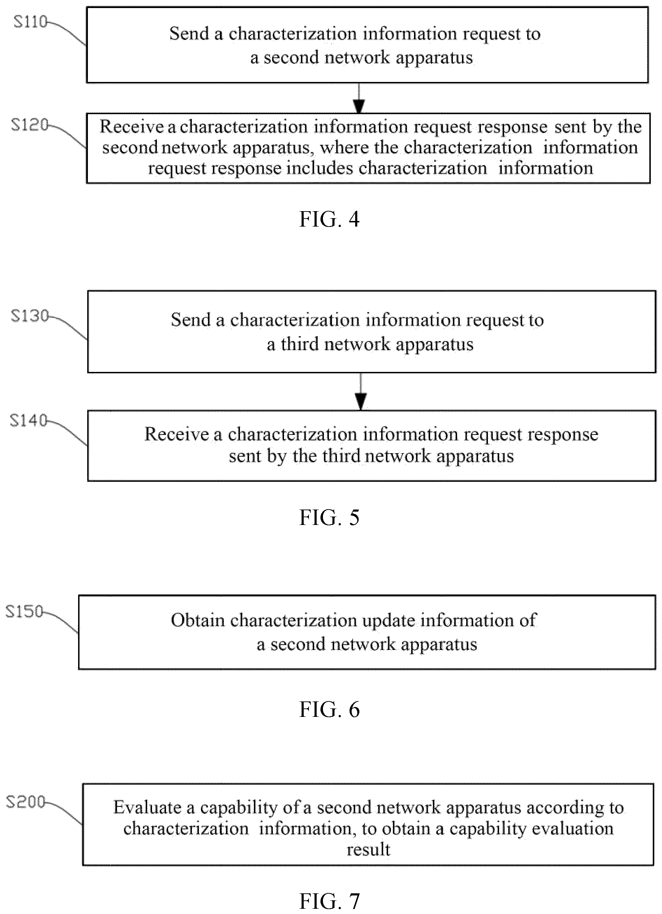

FIG. 4 is a flowchart of a method for acquiring characterization information according to an embodiment of the present disclosure. As shown in FIG. 4, operation S100 is further illustrated. Operation S100 may include, but is not limited to, operations S110 and S120.

At operation S110, a characterization information request is sent to the second network apparatus.

In an existing communication process, different devices, especially devices from different manufacturers, only perform normal communication interactions, without sending their own parameter information to each other. For better interaction with a peer device, the first network apparatus sends a data request after establishing a communicative connection to the network apparatus, to request, from the second network apparatus, the characterization information of the second network apparatus, so as to characterize the second network apparatus.

In a possible implementation, when the first network apparatus establishes a connection to the second network apparatus for the first time, the first network apparatus sends the characterization information request to the second network apparatus.

In another possible implementation, the first network apparatus periodically sends the characterization information request to the second network apparatus, to request, from the second network apparatus, the latest characterization information of the second network apparatus.

At operation S120, a characterization information request response sent by the second network apparatus is received, where the characterization information request response includes the characterization information.

It can be understood that after the first network apparatus executes operation S110, the second network apparatus, after receiving the characterization information request, generates a characterization information request response including the characterization information and sends the characterization information request response to the first network apparatus.

FIG. 5 is a flowchart of a method for acquiring characterization information according to an embodiment of the present disclosure. As shown in FIG. 5, operation S100 is further illustrated. Operation S100 may include, but is not limited to, operations S130 and S140.

At operation S130, a characterization information request is sent to a third network apparatus.

At operation S140, a characterization information request response sent by the third network apparatus is received, where the characterization information request response includes one of:
the characterization information of the second network apparatus sent by the second network apparatus to the third network apparatus; or
processed characterization information obtained by the third network apparatus by processing the characterization information sent by the second network apparatus.

In a possible implementation, the first network apparatus sends the characterization information request to the third network apparatus, and after receiving the characterization information request, the third network apparatus forwards the characterization information request to the second network apparatus. After receiving the characterization information request, the second network apparatus generates the corresponding characterization information request response including the characterization information, and sends the characterization information request response to the third network apparatus. The third network apparatus receives the characterization information request response of the second network apparatus and forwards the characterization information request response to the first network apparatus.

In another possible implementation, the first network apparatus sends the characterization information request to the third network apparatus, and after receiving the characterization information request, the third network apparatus forwards the characterization information request to the second network apparatus. After receiving the characterization information request, the second network apparatus generates the corresponding characterization information request response including the characterization information, and sends the characterization information request response to the third network apparatus. The third network apparatus receives the characterization information request response of the second network apparatus, acquires the characterization information of the second network apparatus therein, further processes the characterization information to obtain processed characterization information of the second network apparatus, generates a new characterization information request response of the second network apparatus, and sends the new characterization information request response to the first network apparatus.

In operation S140, the characterization information obtained by the third network apparatus by processing the characterization information sent by the second network apparatus includes at least one of:
characterization information obtained by the third network apparatus by performing security processing on the characterization information sent by the second network apparatus;
characterization information obtained by the third network apparatus by performing compression processing on the characterization information sent by the second network apparatus;
characterization information obtained by the third network apparatus by performing filling processing on the characterization information sent by the second network apparatus; or
characterization information obtained by the third network apparatus by jointly indicating, by using multiple pieces of information, the characterization information sent by the second network apparatus.

In an implementation, after receiving the characterization information request response of the second network apparatus and obtaining the characterization information of the second network apparatus, the third network apparatus performs security processing on the characterization information of the second network apparatus to obtain characterization information with a security identifier; and the third network apparatus further sends the characterization information with the security identifier to the first network apparatus. For clearer description, the following provides explanation in a specific scenario.

In some network communication scenarios, such as an interaction between a base station and a terminal device, in order to protect the privacy and security of the terminal device, it is inappropriate for some characterization information of the terminal device to be directly transmitted between the terminal device and the base station. In this case, the third network apparatus, such as the core network, may perform security processing on the characterization information and transmit processed characterization information. In this way, sensitive information of the terminal device is shielded from the base station. For example, non-access stratum (NAS) messages are used in 5G to establish a signaling connection between a user equipment (UE) and the core network. NAS messages are transmitted transparently to the base station, and the base station side cannot see specific content of the NAS messages. The core network performs secure conversion on characterization information of the UE to form secure characterization information with a terminal device identifier which has a specific meaning and sends the secure characterization information to the base station. The base station identifies the corresponding UE according to the identifier's meaning, and characterizations the UE according to the secure characterization information to obtain a service policy.

Specific operations for the base station to characterization the terminal device through the core network are as follows:
- after the terminal device is communicatively connected to the core network, characterization information of the terminal device, such as software information used by the terminal device, a hardware chip model, manufacturer information, service package information subscribed by the terminal device, etc., is sent to the core network through a message (for example, a NAS message) between the terminal device and the core network;
- the core network performs security processing on the terminal device's characterization information to obtain secure characterization information;
- the core network sends the secure characterization information to the base station;
- the base station performs security characterizing on the terminal device according to the received secure characterization information; and
- the base station obtains a service policy according to a secure characterization which corresponds to the terminal device.

It can be understood that when the base station needs to perform an operation instruction for the terminal device according to the service policy obtained by using the secure characterization which corresponds to the terminal device, the base station may send the corresponding instruction to the terminal device through the core network, or may directly send the corresponding instruction to the terminal device.

It can be understood that in the above-described actual scenario example, the base station corresponds to the first network apparatus, the terminal device corresponds to the second network apparatus, and the core network corresponds to the third network apparatus.

In another implementation, after obtaining the characterization information of the second network apparatus, the third network apparatus performs compression processing on the characterization information of the second network apparatus to obtain compressed characterization information; and the third network apparatus further sends the compressed characterization information to the first network apparatus to improve the transmission efficiency of the characterization information.

In another alternative implementation, after obtaining the characterization information of the second network apparatus, the third network apparatus performs filling processing on the characterization information of the second network apparatus to obtain filled characterization information; and the third network apparatus sends the filled characterization information to the first network apparatus. The third network apparatus performs filling processing on the characterization information of the second network apparatus, so that the characterization information of the second network apparatus is more complete. Subsequently, the first network apparatus can determinate a more accurate service policy according to the filled characterization information of the second network apparatus.

FIG. 6 is a flowchart of a method for acquiring characterization information according to an embodiment of the present disclosure. As shown in FIG. 6, operation S100 is further explained. Operation S100 may include, but is not limited to, operation S150.

At operation S150, updated characterization information of the second network apparatus is obtained. Here, the updated characterization information of the second network apparatus is from the second network apparatus or the third network apparatus. By acquiring updated characterization information of the second network apparatus, that is, the characterization update information, the first network apparatus updates an original characterization of the second network apparatus and obtains a new service policy, so that the first network apparatus can still retain clear cognition of the second network apparatus after the second network apparatus performs an equipment upgrade such as a software and hardware upgrade or a service package change. This facilitates the upgrade and maintenance of a network communication architecture.

In some possible implementations, operation S100 may further include: acquiring the characterization information proactively sent by the second network apparatus, where the characterization information of the second network apparatus is from the second network apparatus or the third network apparatus.

After the second network apparatus is communicatively connected to the first network apparatus, the second network apparatus proactively sends its own characterization information to the first network apparatus. The second network apparatus proactively sends the characterization information to the first network apparatus, so as to save a process of requesting the characterization information by the first network apparatus and therefore the network communication efficiency is improved.

It can be understood that the second network apparatus may proactively send the characterization information to the first network apparatus when the first network apparatus and the second network apparatus establish a first communicative connection, or when the first network apparatus and the second network apparatus establish a subsequent communicative connection.

In some possible implementations, after the first network apparatus is communicatively connected to the second network apparatus and acquires the characterization information of the second network apparatus once, each time the second network apparatus detects that its own characterization information is updated, the second network apparatus proactively sends characterization update information to the first network apparatus. The first network apparatus acquires the characterization update information of the second network apparatus. Here, self-detection of the second network apparatus includes real-time detection and periodic detection.

In some other possible implementations, the first network apparatus may further receive the characterization update information of the second network apparatus through the third network apparatus. Each time the second network apparatus detects that its own characterization information is updated, the second network apparatus proactively sends the characterization update information to the third network apparatus. The third network apparatus sends the characterization update information of the second network apparatus to the first network apparatus after receiving the characterization update information of the second network apparatus.

In some other possible implementations, the first network apparatus sends a characterization update information request to the second network apparatus. After the second network apparatus receives the characterization update information request, if the characterization information of the second network apparatus is updated at this time, the second network apparatus sends the characterization update information to the first network apparatus. It can be understood that the first network apparatus may send the characterization update information request to the second network apparatus periodically, or may send the characterization update information request to the second network apparatus after the second network apparatus is disconnected from the first network apparatus and a connection is reestablished.

In some other possible implementations, the first network apparatus sends the characterization update information request to the third network apparatus. Then, the third network apparatus sends the characterization update information request to the second network apparatus.

It can be understood that the second network apparatus may send the characterization information to the first network apparatus based on a registration-discovery mechanism, that is, the second network apparatus sends the characterization information periodically or sends the characterization information in an event-triggered manner. For example, the second network apparatus registered with the first network apparatus proactively sends the characterization information to the first network apparatus. For another example, the second network apparatus registered with the third network apparatus proactively sends the characterization information to the third network apparatus, and the third network apparatus forwards the characterization information to the first network apparatus. Alternatively, the second network apparatus may send the characterization information to the first network apparatus based on a request-response mechanism, that is, the second network apparatus sends the characterization information through the request response after receiving the characterization request.

In some other possible implementations, the characterization information acquisition method is further described with an example scenario in which two intelligent agents collaborate with each other. It can be understood that for better distinction, the two intelligent agents are named intelligent agent A and intelligent agent B respectively. The naming here is only to distinguish between the two intelligent agents, rather than pose a limitation. A collaboration process between intelligent agent A and intelligent agent B is as follows.

When intelligent agent A accesses the network for the first time, intelligent agent A proactively sends its own characterization information to a network controller or other intelligent agents, such as a core network, a base station, an edge node, etc., where characterization information of the intelligent agent may include, but is not limited to, a robot model, a software version, chip information, a function, a feature preference, etc.

The network controller characterizations intelligent agent A according to characterization information of intelligent agent A.

The network controller sends a characterization of intelligent agent A to intelligent agent B so that intelligent agent A and intelligent agent B can collaborate.

When intelligent agent A is upgraded and accesses to the network again, intelligent agent A sends upgraded characterization information to the network controller.

The network controller updates the characterization of intelligent agent A according to historical characterization information of intelligent agent A and the upgraded characterization information, to obtain characterization update information of intelligent agent A.

The network controller proactively sends the characterization update information of intelligent agent A to intelligent agent B, so that the collaboration intelligent agent A and intelligent agent B is maintained.

A robot is an intelligent agent between people and things, contains software and hardware information and has individual characteristics such as function, performance, preference, and status. By characterizing the intelligent agent, the intelligent agent can be accurately controlled in a communication network, which facilitates the collaboration between two intelligent agents.

FIG. 7 is a flowchart of a method for acquiring characterization information according to an embodiment of the present disclosure. As shown in FIG. 7, the characterization information acquisition method is further described. The characterization information acquisition method may further include, but is not limited to, operation S200.

At operation S200, a capability of the second network apparatus is evaluated according to the characterization information, to obtain a capability evaluation result.

In some possible implementations, after acquiring characterization information of a plurality of second network apparatuses, the first network apparatus evaluates a capability of each second network apparatus according to the characterization information of each second network apparatus, and obtains a capability evaluation result corresponding to each second network apparatus. In an example of performing a capability evaluation on chip performance of a terminal device, the first network apparatus sends a capability evaluation result of chip performance of each terminal device to the core network or a big data analysis module. The core network or the big data analysis module forms an accurate evaluation of each terminal device chip through data processing. It can be understood that in addition to the capability evaluation on the chip, capability evaluation may be performed on the entire second network apparatus or on a specific module of the second network apparatus, which is not specifically limited in the present disclosure.

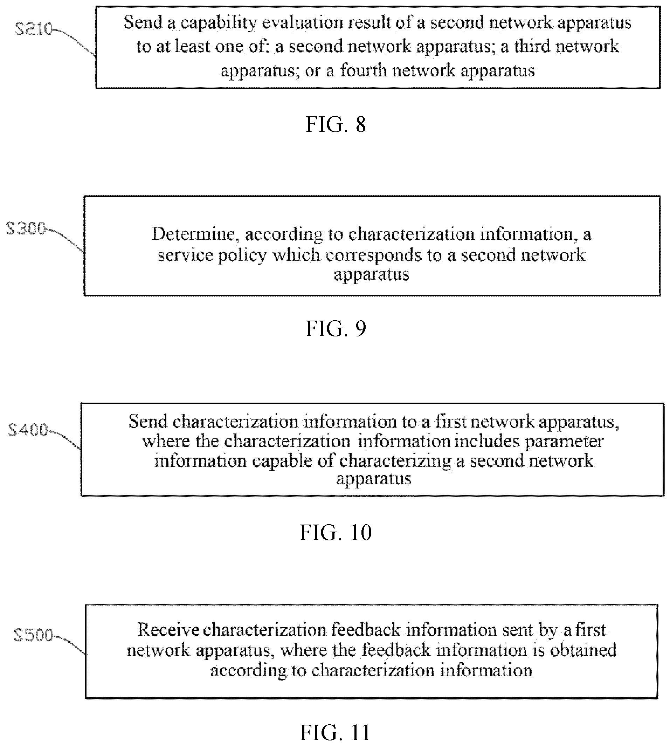

FIG. 8 is a flowchart of a method for acquiring characterization information according to an embodiment of the present disclosure. As shown in FIG. 8, the characterization information acquisition method is further described. After operation S200, the method may further include, but is not limited to, operation S210.

At operation S210, the capability evaluation result of the second network apparatus is sent to at least one of: second network apparatus; third network apparatus; or fourth network apparatus. Here, it can be understood that the fourth network apparatus may be a base station, a terminal device, a core network, an edge node, or the like, which is not specifically limited in the present disclosure.

In some possible implementations, the first network apparatus sends the capability evaluation result of the second network apparatus to the core network or the edge node. The capability evaluation result is stored in the core network or the edge node to help another network apparatus obtain the capability evaluation result. For example, other base station(s) or other terminal device(s) directly obtain the capability evaluation result of the second network apparatus through the core network or the edge node.

FIG. 9 is a flowchart of a method for acquiring characterization information according to an embodiment of the present disclosure. As shown in FIG. 9, the characterization information acquisition method is further described. The characterization information acquisition method may further include, but is not limited to, operation S300.

At operation S300, a service policy which corresponds to the second network apparatus is determined according to the characterization information.

It can be understood that the obtaining, according to the characterization information, a service policy which corresponds to the second network apparatus may be that the first network apparatus analyzes a requirement of the second network apparatus, problems to be solved, and the like according to the characterization information, and then generates the service policy. Alternatively, by pre-constructing a knowledge base, a corresponding service policy may be obtained from the pre-constructed knowledge base according to the characterization information.

In operation S300, operations corresponding to the service policy which corresponds to the second network apparatus include at least one of:
configuring a service type which corresponds to the second network apparatus; activating a service which corresponds to the second network apparatus; deactivating the service which corresponds to the second network apparatus; configuring quality of service (QoS) which corresponds to the second network apparatus; configuring a service capability which corresponds to the second network apparatus; performing resource allocation on the second network apparatus; configuring a carrier resource specific to the second network apparatus; processing a software function which corresponds to the second network apparatus; processing a hardware function which corresponds to the second network apparatus; performing risk avoidance processing on the second network apparatus; or configuring a computing power sharing and scheduling policy of the second network apparatus.

In some possible implementations, the service policy corresponding to the second network apparatus includes at least one of:
- configuration of a service type which corresponds to the second network apparatus; activation of a service which corresponds to the second network apparatus; deactivation of the service which corresponds to the second network apparatus; configuration of QoS which corresponds to the second network apparatus; configuration of a service capability which corresponds to the second network apparatus; resource allocation processing which corresponds to the second network apparatus; configuration of a carrier resource specific to the second network apparatus; software function processing which corresponds to the second network apparatus; hardware function processing which corresponds to the second network apparatus; risk avoidance processing which corresponds to the second network apparatus; or configuration of a computing power sharing and scheduling policy of the second network apparatus.

In some possible implementations, after obtaining the service policy of the second network apparatus, the first network apparatus can further obtain corresponding service policy configuration information according to the service policy of the second network apparatus, and send the service policy configuration information to the second network apparatus. Here, the service policy configuration information includes at least one of:
- configuration information for a service type which corresponds to the second network apparatus; configuration information for activation of a service which corresponds to the second network apparatus; configuration information for deactivation of the service which corresponds to the second network apparatus; configuration information for QoS which corresponds to the second network apparatus; configuration information for a service capability which corresponds to the second network apparatus; configuration information for resource allocation processing which corresponds to the second network apparatus; configuration information for software function processing which corresponds to the second network apparatus; configuration information for hardware function processing which corresponds to the second network apparatus; or configuration information for risk avoidance processing which corresponds to the second network apparatus.

In some possible implementations, processing the software function which corresponds to the second network apparatus includes at least one of: software version fallback; software version upgrade; software package downloading for software upgrade; software version patching; or software version update.

In some possible implementations, processing the hardware function which corresponds to the second network apparatus includes at least one of: turning off hardware power; reducing a hardware voltage; turning on the hardware power; increasing the hardware voltage; or reducing power consumption by means of preset voltage, preset operating frequency, or preset clock.

In some possible implementations, a network controller obtains computing power information (such as hardware information, CPU information, GPU information, storage capacity information, etc.) of each of a plurality of base stations/intelligent agents through characterizations of the base stations/intelligent agents to determinate computing power sharing and computing power scheduling policies. The network controller sends configuration information of the determined computing power sharing and computing power scheduling policies to the corresponding base station/intelligent agent.

It can be understood that the characterization information mentioned in each of the above-described implementations of the present disclosure includes at least one of: software information; hardware information; or service information,

The software information includes at least one of: a software version number, a software version name, a software version identifier, version information of a terminal device's operating system, or version information of an application of a terminal device. The hardware information includes at least one of: a chip model, chip manufacturer information, chip capability information, single board information, radio frequency (RF) component information, baseband component information, device components information, communication chip information, brand information, modem information, or communication module information. The service information includes at least one of: user information, service information, device information, traffic information, or service level information.

In some possible implementations, the resource allocation processing which corresponds to the second network apparatus is illustrated by way of an example where the first network apparatus is a base station, and the second network apparatus is a terminal device.

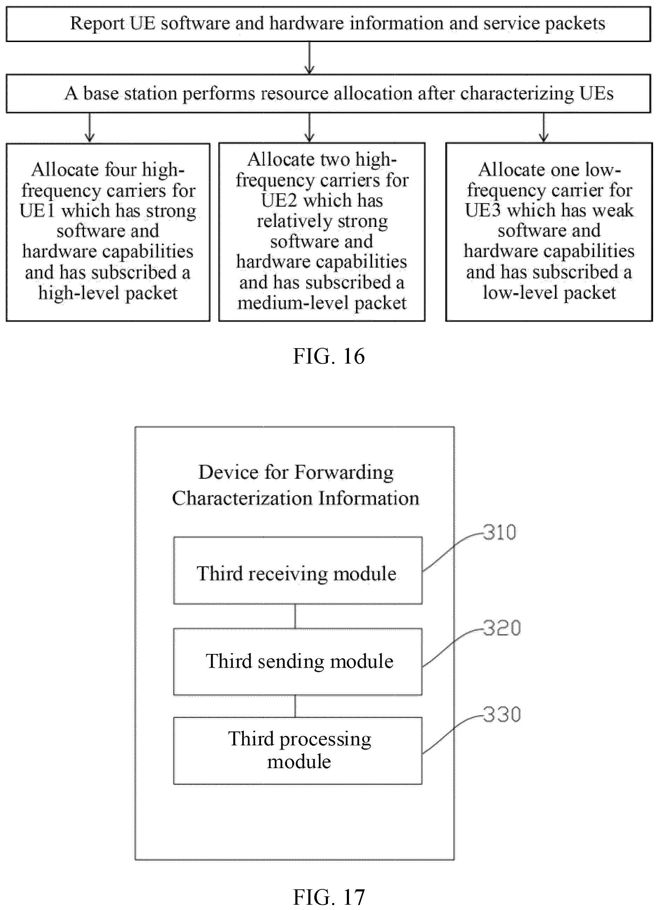

As shown in FIG. 16, the base station may perform a specific resource allocation policy after acquiring characterization information of the terminal device. For example, through analysis of the characterization information of the terminal device, the base station considers that the user of the terminal device has subscribed a high-level package and has a high throughput and low latency requirement, and software and hardware information of the terminal device can support high-speed data transmission under 100 MHz bandwidth. After characterizing the terminal device according to the characterization information, the base station considers that performance requirements of the terminal device can be met with resources of four 25 MHz carriers allocated for transmission. Therefore, the base station can allocate appropriate physical resources according to the characterization information during scheduling to achieve customized requirements. For another example, through analysis of the characterization information of the terminal device, the base station considers that the user of the terminal device has subscribed a medium-level package and has a high throughput and low latency requirement, but software and hardware information of the terminal device can only support two-carrier transmission. After characterizing the terminal device according to the characterization information, the base station considers that performance requirements of the terminal device can be met with resources of two 50MHz carriers allocated for transmission. For another example, through analysis of the characterization information of the terminal device, the base station considers that performance of the software and hardware information of the terminal device is poor at a high frequency spectrum. After characterizing the terminal device according to the characterization information, the base station makes data transmission of the terminal device at low frequency, guaranteeing only basic communication services.

FIG. 10 is a flowchart of a method for sending characterization information according to an embodiment of the present disclosure. As shown in FIG. 10, the characterization information sending method is applied to a second network apparatus which is, for example, a component of the second network apparatus 200 in the system architecture shown in FIG. 1 or FIG. 2. The characterization information sending method may include, but is not limited to, operation S400.

At operation S400, characterization information is sent to a first network apparatus, where the characterization information includes parameter information capable of characterizing the second network apparatus.

In some possible implementations, the second network apparatus receives a characterization information request sent by a first network apparatus, and sends its own characterization information to the first network apparatus according to the characterization information request.

In some other possible implementations, the first network apparatus sends a characterization information request to a third network apparatus. The third network apparatus sends the characterization information request of the first network apparatus to the second network apparatus after obtaining the characterization information request of the first network apparatus. The second network apparatus acquires, via the third network apparatus, the characterization information request sent by the first network apparatus, and sends its own characterization information to the first network apparatus according to the characterization information request.

In some other possible implementations, the second network apparatus proactively sends the characterization information to the first network apparatus.

In some other possible implementations, the second network apparatus proactively sends the characterization information to the third network apparatus. After the third network apparatus receives the characterization information proactively sent by the second network apparatus, the third network apparatus proactively forwards the characterization information of the second network apparatus to the first network apparatus. It can be understood that the characterization information may be directly forwarded by the third network apparatus or may be forwarded after processing by the third network apparatus.

Operation S400 is further illustrated. When a first condition is satisfied, the second network apparatus sends the characterization information to the first network apparatus, where the first condition is at least one of:
- the second network apparatus accessing a network for the first time; or
- the characterization information of the second network apparatus being updated.

In some possible implementations, when the second network apparatus accesses the network for the first time and establishes a communicative connection to the first network apparatus, the second network apparatus collects its own characterization information and sends the characterization information to the first network apparatus.

In some other possible implementations, the second network apparatus updates the characterization information when the characterization information changes due to a software program upgrade, hardware update maintenance, etc. After the second network apparatus completes the updating of the characterization information, the second network apparatus sends updated characterization information of the second network apparatus to the first network apparatus.

In some other possible implementations, operation S400 is further described with a specific example. In a scenario in which the first network apparatus is a network node, such as a core network, a base station, or a data processing center, and the second network apparatus is a terminal device: after the terminal device accesses the network, the terminal device proactively reports its own characterization information to the network node to help the corresponding network node understand characteristics of the terminal device. For example, the terminal device proactively sends a terminal mobile phone brand and chip information to the network node. The network node classifies terminal devices with abnormal behavior according to mobile phone brands or chip models, and associates the abnormal behavior with mobile phone brands/chips, so that it can be determined which brand or which terminal device chip is defective. Defect identification can promote the improvement of terminal manufacturers' problems. Fault avoidance can also be performed in advance in the interaction between the network node and the terminal device. Specific operations are as follows.

The terminal device accesses the network for the first time and proactively reports characterization information to the network node. The characterization information includes software and hardware information of the terminal device, and the characterization information can be reported in UE capability.

The network node collects characterization information of a plurality of terminal devices, and performs correlation analysis on the different terminal devices and faults, for example, statistics are made on fault types corresponding to different terminal device chips.

The network node gives analysis-based opinions of the terminal devices' defects according to relationships between the terminal devices and the faults, for example, a specific type of terminal device chip tends to have call drops, and a data rate of a specific terminal device chip is limited.

In some possible implementations, the characterization information of the second network apparatus includes secure characterization information which is characterization information obtained by performing security processing on the characterization information. It can be understood that the secure characterization information may be characterization information obtained by the second network apparatus by performing security processing on the characterization information. Alternatively, the secure characterization information may be characterization information obtained by the third network apparatus by performing security processing on the characterization information of the second network apparatus which is sent by the second network apparatus to the third network apparatus.

FIG. 11 is a flowchart of a method for sending characterization information according to an embodiment of the present disclosure. As shown in FIG. 11, the characterization information sending method is further described. After operation S400, the method may further include, but is not limited to, operation S500.

At operation S500, characterization feedback information sent by the first network apparatus is received, where the feedback information is obtained according to the characterization information.

In some possible implementations, the characterization feedback information may be a service policy corresponding to the second network apparatus determined by the first network apparatus according to the characterization information of the second network apparatus. Alternatively, characterization feedback information may be a capability evaluation structure obtained by the first network apparatus by evaluating a capability of the second network apparatus according to the characterization information of the second network apparatus.

Operation S500 is further illustrated. Receiving characterization feedback information sent by the first network apparatus includes one of:
receiving a capability evaluation result of the second network apparatus sent by the first network apparatus, where the capability evaluation result of the second network apparatus is obtained through processing by the first network apparatus, or is obtained through processing by the third network apparatus and then forwarded to the first network apparatus; or
- receiving a service policy of the second network apparatus sent by the first network apparatus, where the service policy of the second network apparatus is obtained through processing by the first network apparatus, or is obtained through processing by the third network apparatus and then forwarded to the first network apparatus.

In some possible implementations, after the second network apparatus receives the service policy corresponding to the second network apparatus sent by the first network apparatus, the second network apparatus performs a corresponding operation according to the received corresponding service policy.

In some possible implementations, the service policy of the second network apparatus includes at least one of:
- configuring a service type which corresponds to the second network apparatus; activating a service which corresponds to the second network apparatus; deactivating the service which corresponds to the second network apparatus; configuring QoS which corresponds to the second network apparatus; configuring a service capability which corresponds to the second network apparatus; performing resource allocation on the second network apparatus; processing a software function which corresponds to the second network apparatus; processing a hardware function which corresponds to the second network apparatus; or performing risk avoidance processing on the second network apparatus.

In some possible implementations, the processing a software function which corresponds to the second network apparatus includes at least one of: software version fallback; software version upgrade; software package downloading for software upgrade; software version patching; or software version update.

In some possible implementations, the processing a hardware function which corresponds to the second network apparatus includes at least one of: turning off hardware power; reducing a hardware voltage; turning on the hardware power; increasing the hardware voltage; or reducing power consumption by means of preset voltage, preset operating frequency or preset clock.

It can be understood that the characterization information mentioned in each of the above-described implementations of the present disclosure includes at least one of: software information; hardware information; or service information.

The software information includes at least one of: a software version number, a software version name, a software version identifier, version information of a terminal device's operating system, or version information of an application of a terminal device. The hardware information includes at least one of: a chip model, chip manufacturer information, chip capability information, single board information, radio frequency (RF) component information, baseband component information, device components information, communication chip information, brand information, modem information, or communication module information. The service information includes at least one of: user information, service information, device information, traffic information, or service level information.

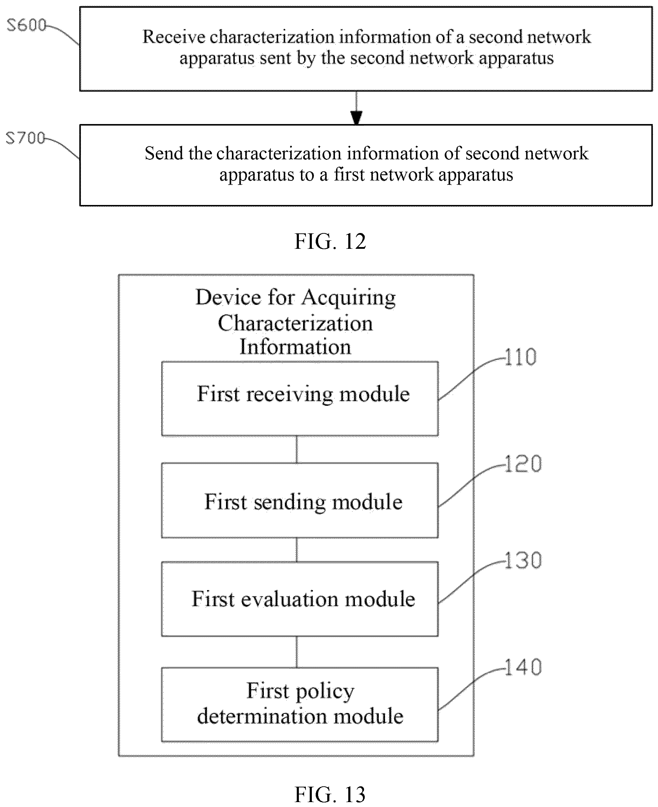

FIG. 12 is a flowchart of a method for acquiring characterization information according to an embodiment of the present disclosure. As shown in FIG. 12, the characterization information sending method is applied to a third network apparatus which is, for example, the third network apparatus 300 included in the system architecture shown in FIG. 2. The characterization information sending method may include, but is not limited to, operations S600 and S700.

At operation S600, second network apparatus characterization information sent by a second network apparatus is received.

At operation S700, the second network apparatus characterization information is sent to a first network apparatus, where the characterization information includes parameter information capable of characterizing the second network apparatus.

In some possible implementations, sending the second network apparatus characterization information to a first network apparatus in S700 includes at least one of: performing security processing on the second network apparatus characterization information by the third network apparatus, and sending security-processed second network apparatus characterization information to the first network apparatus; performing compression processing on the second network apparatus characterization information by the third network apparatus, and sending compressed second network apparatus characterization information to the first network apparatus; or performing filling processing on the second network apparatus characterization information by the third network apparatus, and sending filled second network apparatus characterization information to the first network apparatus.

Operation S600 is further illustrated. Receiving second network apparatus characterization information sent by the second network apparatus includes:
- receiving, by the third network apparatus, a characterization information request sent by the first network apparatus;
- sending, by the third network apparatus, the characterization information request of the first network apparatus to the second network apparatus;
- receiving, by the third network apparatus, a characterization information request response sent by the second network apparatus, where the characterization information request response includes the second network apparatus characterization information; and
- sending, by the third network apparatus, the characterization information request response of the second network apparatus to the first network apparatus, where the characterization information request response includes the second network apparatus characterization information.

In some possible implementations, operation S600 further includes: receiving second network apparatus characterization update information sent by the second network apparatus. After receiving the second network apparatus characterization update information sent by the second network apparatus, the third network apparatus sends the second network apparatus characterization update information to the first network apparatus.

In some possible implementations, after the third network apparatus sends the second network apparatus characterization information to the first network apparatus, the first network apparatus evaluates a capability of the second network apparatus according to the second network apparatus characterization information to obtain a capability evaluation result of the second network apparatus. The first network apparatus sends the capability evaluation result of the second network apparatus to the third network apparatus. After receiving the capability evaluation result of the second network apparatus, the third network apparatus performs statistical analysis and re-evaluation on the acquired capability evaluation result of the second network apparatus, to obtain an updated capability evaluation result of the second network apparatus.

In some other possible implementations, after the third network apparatus sends the second network apparatus characterization information to the first network apparatus, the first network apparatus determines a service policy of the second network apparatus according to the second network apparatus characterization information, and the first network apparatus sends the service policy of the second network apparatus to the third network apparatus. After receiving the service policy of the second network apparatus, the third network apparatus performs statistical analysis and re-determination on the acquired service policy of the second network apparatus to obtain an updated service policy of the second network apparatus.

In some other possible implementations, after obtaining characterization feedback information of the second network apparatus, the third network apparatus sends the characterization feedback information to at least one of first network apparatus, second network apparatus, or fourth network apparatus. It can be understood that the characterization feedback information is at least one of: the capability evaluation result of the second network apparatus, or the service policy of the second network apparatus obtained by the third network apparatus by means of the above method.

FIG. 13 is a schematic diagram of a device for acquiring characterization information according to an embodiment of the present disclosure. As shown in FIG. 13, the device according to this embodiment of the present disclosure may perform the method for acquiring characterization information according to any one of the embodiments of the present disclosure, and has functional modules for execution of the method and can achieve corresponding technical effects. The device can be implemented as software, hardware or a combination of software and hardware, and includes: a first receiving module 110, a first sending module 120, a first evaluation module 130, and a first policy determination module 140.

The first receiving module is configured to acquire characterization information of a second network apparatus, where the characterization information includes parameter information capable of characterizing the second network apparatus.

The first sending module is configured to perform at least one of the following: sending a characterization information request which is specific to the second network apparatus; send a capability evaluation result of the second network apparatus; or send a service policy of the second network apparatus.

The first evaluation module is configured to obtain a capability evaluation result of the second network apparatus according to the characterization information of the second network apparatus.

The first policy determination module is configured to obtain, according to the characterization information of the second network apparatus, a service policy corresponding to the second network apparatus.

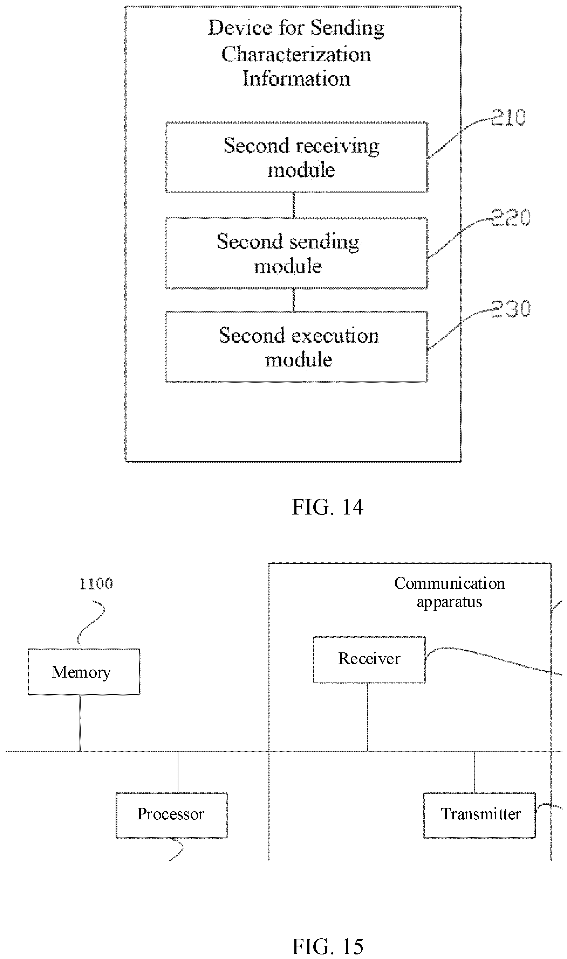

FIG. 14 is a schematic diagram of a device for sending characterization information according to an embodiment of the present disclosure. As shown in FIG. 14, the device according to this embodiment of the present disclosure may perform the method for sending characterization information according to any one of the embodiments of the present disclosure, and has functional modules for execution of the method and can achieve corresponding technical effects. The apparatus can be implemented as software, hardware or a combination of software and hardware, and includes: a second receiving module 210, a second sending module 220, and a second execution module 230.

The second sending module is configured to send characterization information to a first network apparatus, where the characterization information includes parameter information characterizing a second network apparatus.

The second receiving module is configured to receive at least one of: a second network apparatus characterization information request sent by the first network apparatus to the second network apparatus; a second network apparatus characterization information request forwarded by a third network apparatus; a capability evaluation result of the second network apparatus sent by the first network apparatus to the second network apparatus; a capability evaluation result of the second network apparatus forwarded by the third network apparatus; a service policy which corresponds to the second network apparatus sent by the first network apparatus to the second network apparatus; or a service policy which corresponds to the second network apparatus forwarded by the third network apparatus.

The second execution module is configured to execute a service policy which corresponds to the second network apparatus.

**In** some possible implementations, execution of the service policy which corresponds to the second network apparatus includes at least one of: configuring a service type which corresponds to the second network apparatus; activating a service which corresponds to the second network apparatus; deactivating the service which corresponds to the second network apparatus; configuring QoS which corresponds to the second network apparatus; configuring a service capability which corresponds to the second network apparatus; performing resource allocation on the second network apparatus; configuring a carrier resource specific to the second network apparatus; processing a software function which corresponds to the second network apparatus; processing a hardware function which corresponds to the second network apparatus; or performing risk avoidance processing on the second network apparatus.

The processing of a software function which corresponds to the second network apparatus includes at least one of: software version fallback; software version upgrade; software package downloading for software upgrade; software version patching; or software version update. The processing of a hardware function which corresponds to the second network apparatus includes at least one of: turning off hardware power; reducing a hardware voltage; turning on the hardware power; increasing the hardware voltage; or reducing power consumption by means of preset voltage, preset operating frequency, or preset clock.

FIG. 17 is a schematic diagram of a device for forwarding characterization information according to an embodiment of the present disclosure. As shown in FIG. 17, the device according to this embodiment of the present disclosure may perform the method for forwarding characterization information according to any one of the embodiments of the present disclosure, and has functional modules for execution of the method and can achieve corresponding technical effects. The apparatus can be realized by software, hardware or a combination of software and hardware, including: a third receiving module 310, a third sending module 320, and a third processing module 330.

The third receiving module 310 is configured to perform at least one of: receiving characterization information sent by a second network apparatus; receiving a characterization information request to the second network apparatus sent by a first network apparatus; receiving an evaluation result of the second network apparatus sent by the first network apparatus; or receiving policy information of the second network apparatus sent by the first network apparatus.

The third sending module 320 is configured to perform at least one of: sending the characterization information request to the second network apparatus; sending characterization information of the second network apparatus to the first network apparatus; sending a characterization information response of the second network apparatus to the first network apparatus, where the characterization information response includes the characterization information of the second network apparatus; sending, to the second network apparatus, an evaluation result of the second network apparatus determined by the first network apparatus; sending, to a fourth network apparatus, the evaluation result of the second network apparatus determined by the first network apparatus; sending, to the second network apparatus, the policy information of the second network apparatus determined by the first network apparatus; sending, to the fourth network apparatus, the policy information of the second network apparatus determined by the first network apparatus; sending, to the second network apparatus, an evaluation result of the second network apparatus determined by the third network apparatus; sending, to the fourth network apparatus, the evaluation result of the second network apparatus determined by the third network apparatus; sending, to the second network apparatus, policy information of the second network apparatus determined by the third network apparatus; or sending, to the fourth network apparatus, the policy information of the second network apparatus determined by the third network apparatus.

The third processing module 330 is configured to perform at least one of: processing the received second network apparatus characterization information; re-evaluating the received evaluation result of the second network apparatus; or performing policy modification on the received policy information of the second network apparatus. The processing of the second network apparatus characterization information includes for example: performing security processing on the characterization information to obtain secure characterization information, compressing the characterization information to form compressed characterization information, enriching, and perfecting the characterization information to obtain filled characterization information, or jointly indicating the characterization information by using multiple pieces of information.

According to another embodiment of the present disclosure, a characterization unit for managing information is provided, which is configured to manage characterization information and a service policy. The characterization information is obtained by using the method for acquiring characterization information according to any one of the embodiments of the present disclosure, or the method for sending characterization information according to any one of the embodiments of the present disclosure.

In some possible implementations, the unit includes at least one of:
- a characterization information management layer provided in a network architecture and configured to manage the characterization information;
- a characterization information management plane provided in a network architecture and configured for flow management of the characterization information;
- a characterization information management node configured to manage the characterization information, where understandably, a characterization information management node (for example, a core network node) is defined in a network for collecting and managing characterization information of nodes such as a UE and a base station, and sending the characterization information to other nodes; or
a characterization information management functional module provided on a first network apparatus.

In some possible implementations, the unit further includes a QoS conversion module configured to establish a mapping relationship between the characterization information and network QoS.

In some possible implementations, the unit analyzes and rates a characterization after obtaining software and hardware characterization information, and the QoS conversion module maps a result of the analysis and grading into a QoS parameter, for example, a device or device software or device hardware with a characterization having a low grade is mapped into a QoS low priority by the QoS conversion module. Alternatively, QoS software and hardware capability description information and parameters may be added, that is, the software and hardware characterization information can be converted into QoS software and hardware capability description information and parameters.

FIG. 15 is a schematic diagram of a network element according to an embodiment of the present disclosure. As shown in FIG. 15, the network element includes a memory 1100, a processor 1200, and a communication apparatus 1300. There may be one or more memories 1100 and processors 1200, although one memory 1100 and one processor 1200 are shown by way of an example in FIG. 15. The memory 1100 and the processor 1200 of the device may be connected by a bus or in other ways. In FIG. 15, the connection is realized by a bus, for example.

As a computer-readable storage medium, the memory 1100 may be configured to store software programs, computer-executable programs, and modules, for example, program instruction(s)/module(s) corresponding to the characterization information acquisition method and/or the characterization information sending method of any one of the embodiments of the present disclosure. The processor 1200 implements the above-described characterization information acquisition method and/or characterization information sending method by executing the software programs, instructions, and modules stored in the memory 1110.

The memory 1100 may mainly include a program storage area and a data storage area, where the program storage area may store an operating system and application program(s) required by at least one feature. In addition, the memory 1100 may include a high-speed random-access memory and a non-volatile memory, for example, at least one magnetic disk storage device, a flash memory device, or another non-volatile solid-state storage device. In some examples, the memory 1100 may further include memories remotely located with respect to the processor 1200, and these remote memories may be connected to the device via a network. Examples of the above-mentioned network include, but are not limited to, the Internet, an intranet, a local area network, a mobile communication network, and a combination thereof.

The communication apparatus 1300 is configured to transmit and receive information according to the control of the processor 1200.

In an embodiment, the communication apparatus 1300 includes a receiver 1310 and a transmitter 1320. The receiver 1310 is a module or a combination of components in an electronic device that receives data. The transmitter 1320 is a module or a combination of components in an electronic device that transmits data.

According to another embodiment of the present disclosure, a computer-readable storage medium is provided, which stores computer-executable instructions for executing the method for acquiring characterization information and/or the method for sending characterization information of any one of the embodiments of the present disclosure.

According to another embodiment of the present disclosure, a computer program product is provided, which includes a computer program or computer instructions stored in a computer-readable storage medium, from which a processor of a computer device reads the computer program or the computer instructions, and the computer program or the computer instructions, when executed by the processor, cause the computer device to perform the method for acquiring characterization information and/or the method for sending characterization information of any of the embodiments of the present disclosure.

The system architecture and an application scenario described in the embodiments of the present disclosure are for more clearly describing the technical schemes of the embodiments of the present disclosure, and do not constitute a limitation on the technical schemes set forth in the embodiments of the present disclosure. Those of ordinary skill in the art may understand that, with evolution of the system architecture and emergence of new application scenarios, the technical schemes set forth in the embodiments of the present disclosure are also applicable to similar technical problems.

It can be understood by those of ordinary skill in the art that all or some of the operations of the methods, systems and functional modules/units in the devices disclosed above can be implemented as software, firmware, hardware, and appropriate combinations thereof.

In a hardware implementation, the division into functional modules/units mentioned in the above description does not necessarily correspond to the division of physical components; for example, one physical component may have a plurality of functions, or one function or operation may be j ointly performed by several physical components. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable, and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, or a computer. As illustrated by using figures, both a computing device and an application that runs on a computing device may be components. One or more components may reside within a process or a thread of execution, and a component may be located on one computer or distributed between two or more computers. In addition, these components may be executed by various computer-readable media that store various data structures. For example, the components may communicate by using a local or remote process and based on a signal having one or more data packets (for example, data from two components interacting with another component in a local system, a distributed system, or across a network such as Internet interacting with another system by using the signal).

Some embodiments of the present disclosure have been described above with reference to the accompanying drawings and are not to limit the scope of the present disclosure. Any modifications, equivalent substitutions, and improvements made by those of ordinary skill in the art without departing from the scope and essence of the present disclosure shall fall within the scope of the present disclosure.

## Claims

1. A method for acquiring characterization information, applied to a first network apparatus, the method comprising:
acquiring characterization information of a second network apparatus, wherein the characterization information comprises parameter information capable of characterizing the second network apparatus.

2. The method as claimed in claim 1, wherein acquiring characterization information of the second network apparatus comprises:
sending a characterization information request to the second network apparatus; and
receiving a characterization information request response sent by the second network apparatus, wherein the characterization information request response comprises the characterization information.

3. The method as claimed in claim 1, wherein acquiring characterization information of the second network apparatus comprises:
sending a characterization information request to a third network apparatus;
receiving a characterization information request response sent by the third network apparatus, wherein the characterization information request response comprises one of:
the characterization information of the second network apparatus sent by the second network apparatus to the third network apparatus; or
the characterization information obtained by the third network apparatus by processing the characterization information sent by the second network apparatus.

4. The method as claimed in claim 3, wherein the characterization information obtained by the third network apparatus by processing the characterization information sent by the second network apparatus comprises at least one of:
the characterization information obtained by the third network apparatus by performing security processing on the characterization information sent by the second network apparatus;
the characterization information obtained by the third network apparatus by performing compression processing on the characterization information sent by the second network apparatus; or
the characterization information obtained by the third network apparatus by performing filling processing on the characterization information sent by the second network apparatus.

5. The method as claimed in claim 1 or 3, wherein acquiring the characterization information of the second network apparatus comprises at least one of:
acquiring the characterization information proactively sent by the second network apparatus, wherein the characterization information of the second network apparatus is from the second network apparatus or the third network apparatus; and
obtaining characterization update information of the second network apparatus, wherein the characterization update information of the second network apparatus is from the second network apparatus or the third network apparatus.

6. The method as claimed in claim 1, further comprising:
evaluating a capability of the second network apparatus according to the characterization information, to obtain a capability evaluation result.

7. The method as claimed in claim 6, further comprising:
sending the capability evaluation result of the second network apparatus to at least one of:
a second network apparatus; a third network apparatus; or a fourth network apparatus.

8. The method as claimed in claim 1, further comprising:
determining, according to the characterization information, a service policy corresponding to a second network apparatus.

9. The method as claimed in claim 8, wherein the service policy corresponding to the second network apparatus comprises at least one of:
configuring a service type corresponding to the second network apparatus;
activating a service corresponding to the second network apparatus;
deactivating the service corresponding to the second network apparatus;
configuring quality of service (QoS) corresponding to the second network apparatus;
configuring a service capability corresponding to the second network apparatus;
performing resource allocation to the second network apparatus;
configuring a carrier resource specific to the second network apparatus;
processing a software function corresponding to the second network apparatus;
processing a hardware function corresponding to the second network apparatus;
performing risk avoidance processing on the second network apparatus; or
configuring a computing power sharing and scheduling policy of the second network apparatus.

10. The method as claimed in claim 9, wherein processing the software function corresponding to the second network apparatus comprises at least one of:
software version fallback;
software version upgrade;
software package downloading for software upgrade;
software version patching; or
software version update.

11. The method as claimed in claim 9, wherein processing the hardware function corresponding to the second network apparatus comprises at least one of:
turning off hardware power;
reducing a hardware voltage;
turning on the hardware power;
increasing the hardware voltage; or
reducing power consumption.

12. The method as claimed in claim 1, wherein the characterization information comprises at least one of:
software information;
hardware information; or
service information,
wherein the software information comprises at least one of:
a software version number,
a software version name,
a software version identifier,
version information of an operating system of a terminal device, or
version information of an application of the terminal device;
the hardware information comprises at least one of:
a chip model,
chip manufacturer information,
chip capability information,
single board information,
radio frequency (RF) component information,
baseband component information,
device components information,
communication chip information,
brand information,
modem information, or
communication module information; and
the service information comprises at least one of:
user information,
service information,
device information,
traffic information, or
service level information.

13. A method for sending characterization information, applied to a second network apparatus, the method comprising:
sending characterization information to a first network apparatus, wherein the characterization information comprises parameter information capable of characterizing the second network apparatus.

14. The method as claimed in claim 13, wherein sending the characterization information to the first network apparatus comprises one of:
receiving a characterization information request sent by the first network apparatus, and sending the characterization information to the first network apparatus according to the characterization information request;
receiving the characterization information request sent by a third network apparatus, and sending the characterization information to the third network apparatus, wherein the characterization information is forwarded to the first network apparatus by the third network apparatus;
proactively sending the characterization information to the first network apparatus; or
proactively sending the characterization information to the third network apparatus, wherein the characterization information is forwarded to the first network apparatus by the third network apparatus.

15. The method as claimed in claim 13, wherein sending the characterization information to the first network apparatus comprises:
sending the characterization information to the first network apparatus, in response to a satisfaction of a first condition, wherein the first condition comprises at least one of:
an initial network access by the second network apparatus; or
an update of the characterization information of the second network apparatus.

16. The method as claimed in claim 13, wherein the characterization information comprises secure characterization information obtained by performing security processing on the characterization information.

17. The method as claimed in claim 13, further comprising:
receiving characterization feedback information sent by the first network apparatus.

18. The method as claimed in claim 17, wherein receiving the characterization feedback information sent by the first network apparatus comprises at least one of:
receiving a capability evaluation result of the second network apparatus sent by the first network apparatus, wherein the capability evaluation result of the second network apparatus is obtained through processing by the first network apparatus, or is obtained through processing by the third network apparatus and then forwarded to the first network apparatus; or
receiving a service policy of the second network apparatus sent by the first network apparatus, wherein the service policy of the second network apparatus is obtained through processing by the first network apparatus, or is obtained through processing by the third network apparatus and then forwarded to the first network apparatus.

19. The method as claimed in claim 18, wherein the service policy of the second network apparatus comprises at least one of:
configuring a service type corresponding to the second network apparatus;
activating a service corresponding to the second network apparatus;
deactivating the service corresponding to the second network apparatus;
configuring quality of service (QoS) corresponding to the second network apparatus;
configuring a service capability corresponding to the second network apparatus;
performing resource allocation to the second network apparatus;
configuring a carrier resource specific to the second network apparatus;
processing a software function corresponding to the second network apparatus;
processing a hardware function corresponding to the second network apparatus;
performing risk avoidance processing on the second network apparatus; or
configuring a computing power sharing and scheduling policy of the second network apparatus.

20. The method as claimed in claim 19, wherein processing the software function corresponding to the second network apparatus comprises at least one of:
software version fallback;
software version upgrade;
software package downloading for software upgrade;
software version patching; or
software version update.

21. The method as claimed in claim 19, wherein processing the hardware function corresponding to the second network apparatus comprises at least one of:
turning off hardware power;
reducing a hardware voltage;
turning on the hardware power;
increasing the hardware voltage; or
reducing power consumption.

22. The method as claimed in claim 18 or 19, further comprising:
performing a corresponding operation according to the received service policy of the second network apparatus.

23. The method as claimed in claim 13, wherein
the characterization information comprises at least one of:
software information comprising at least one of a software version number, a software version name, or a software version identifier;
hardware information; or
service information,
wherein the software information comprises at least one of:
a software version number,
a software version name,
a software version identifier,
version information of an operating system of a terminal device, or
version information of an application of the terminal device;
the hardware information comprises at least one of:
a chip model,
chip manufacturer information,
chip capability information,
single board information,
radio frequency (RF) component information,
baseband component information,
device components information,
communication chip information,
brand information, modem information, or
communication module information; and
the service information comprises at least one of:
user information,
service information,
device information,
traffic information, or
service level information.

24. A method for acquiring characterization information, applied to a third network apparatus, the method comprising:
receiving characterization information of a second network apparatus sent by the second network apparatus; and
sending the characterization information of the second network apparatus to a first network apparatus, wherein the characterization information comprises parameter information capable of characterizing the second network apparatus.

25. The method as claimed in claim 24, wherein sending the characterization information of the second network apparatus to the first network apparatus comprises at least one of:
performing security processing on the characterization information of the second network apparatus by the third network apparatus, and sending security-processed characterization information of the second network apparatus to the first network apparatus;
performing compression processing on the characterization information of the second network apparatus by the third network apparatus, and sending compressed characterization information of the second network apparatus to the first network apparatus; or
performing filling processing on the characterization information of the second network apparatus by the third network apparatus, and sending filled characterization information of the second network apparatus to the first network apparatus.

26. The method as claimed in claim 24, wherein receiving the characterization information of the second network apparatus sent by the second network apparatus comprises at least one of:
receiving, by the third network apparatus, a characterization information request sent by the first network apparatus;
sending, by the third network apparatus, the characterization information request to the second network apparatus;
receiving, by the third network apparatus, a characterization information request response sent by the second network apparatus, wherein the characterization information request response comprises the characterization information of the second network apparatus;
sending, by the third network apparatus, the characterization information request response to the first network apparatus, wherein the characterization information request response comprises the characterization information of the second network apparatus; or
receiving, by the third network apparatus, the characterization information proactively sent by the second network apparatus.

27. The method as claimed in claim 24, wherein receiving the characterization information of the second network apparatus sent by the second network apparatus comprises:
receiving characterization update information of the second network apparatus sent by the second network apparatus.

28. The method as claimed in claim 24, further comprising at least one of:
receiving a capability evaluation result of the second network apparatus sent by the first network apparatus; or
performing a further evaluation, by the third network apparatus, on the capability evaluation result of the second network apparatus to obtain an updated capability evaluation result of the second network apparatus.

29. The method as claimed in claim 24, further comprising at least one of:
receiving a service policy of the second network apparatus sent by the first network apparatus, wherein the service policy is obtained according to the characterization information of the second network apparatus; or
performing a further evaluation, by the third network apparatus, on the service policy of the second network apparatus to obtain an updated service policy of the second network apparatus.

30. The method as claimed in claims 24, 28, 29, further comprising:
sending characterization feedback information of the second network apparatus to at least one of:
the first network apparatus; the second network apparatus; or a fourth network apparatus; and
the characterization feedback information of the second network apparatus comprises at least one of:
the capability evaluation result of the second network apparatus; or
the service policy of the second network apparatus.

31. A device for acquiring characterization information, comprising:
a first receiving module, configured to acquire characterization information of a second network apparatus, wherein the characterization information comprises parameter information capable of characterizing the second network apparatus.

32. The device as claimed in claim 31, further comprising:
a first sending module configured to perform at least one of:
sending a characterization information request which is specific to the second network apparatus;
sending a capability evaluation result of the second network apparatus; or
sending a service policy of the second network apparatus.

33. The device as claimed in claim 31, further comprising:
a first evaluation module, configured to obtain a capability evaluation result of the second network apparatus according to the characterization information.

34. The device as claimed in claim 31, further comprising:
a first policy determination module, configured to obtain, according to the characterization information, a service policy which corresponds to the second network apparatus.

35. A device for sending characterization information, comprising:
a second sending module, configured to send characterization information to a first network apparatus, wherein the characterization information comprises parameter information capable of characterizing the second network apparatus.

36. The device as claimed in claim 35, further comprising:
a second receiving module, configured to receive at least one of:
a second network apparatus characterization information request sent by the first network apparatus to the second network apparatus;
a second network apparatus characterization information request forwarded by a third network apparatus;
a capability evaluation result of the second network apparatus sent by the first network apparatus to the second network apparatus;
a capability evaluation result of the second network apparatus forwarded by the third network apparatus;
a service policy which corresponds to the second network apparatus sent by the first network apparatus to the second network apparatus; or
a service policy which corresponds to the second network apparatus forwarded by the third network apparatus.

37. The device as claimed in claim 35, further comprising:
a second execution module, configured to execute a service policy which corresponds to the second network apparatus.

38. A unit for managing characterization information management, configured to manage characterization information and a service policy, wherein the characterization information is obtained by means of the method for acquiring the characterization information as claimed in any one of claims 1 to 12 or 24 to 30, or the method for sending characterization information as claimed in any one of claims 13 to 23.

39. The unit as claimed in claim 38, wherein the unit comprises at least one of:
a characterization information management layer provided in a network architecture and configured to manage the characterization information;
a characterization information management plane provided in the network architecture and configured for flow management of the characterization information;
a characterization information management node configured to manage the characterization information; or
a characterization information management functional module provided on a first network apparatus.

40. The unit as claimed in any one of claims 38 and 39, further comprising a quality of service (QoS) conversion module configured to establish a mapping relationship between the characterization information and network QoS.

41. A network element, comprising: a memory, a processor, and a computer program stored in the memory and executable by the processor, wherein the computer program, when executed by the processor, causes the processor to carry out the method for acquiring characterization information as claimed in any one of claims 1 to 12 or 24 to 30, or the method for sending characterization information as claimed in any one of claims 13 to 23.

42. The network element of claim 41, further comprising the unit as claimed in any one of claims 38 to 40.

43. A computer-readable storage medium, storing computer-executable instructions which, when executed by a computer, cause the computer to implement the method for acquiring characterization information as claimed in any one of claims 1 to 12 or 24 to 30, or the method for sending characterization information as claimed in any one of claims 13 to 23.

44. A computer program product, comprising a computer program or computer instructions stored in a computer-readable storage medium, from which a processor of a computer device reads the computer program or the computer instructions, wherein the computer program or the computer instructions, when executed by the processor, cause the computer device to carry out the method for acquiring characterization information as claimed in any one of claims 1 to 12 or 24 to 30, or the method for sending characterization information as claimed in any one of claims 13 to 23.
